# DEMANDE DE BREVET EUROPEEN

(11) **EP 0 922 560 A1**
(43) Date de publication de la demande: **16.06.1999**
(21) Numéro de dépôt: 98490035.7
(22) Date de dépôt: 08.12.1998
(51) Int. Cl.: B29C 70/64, B29C 41/32, B32B 27/30, E01C 11/24

(54) **Procédé de fabrication d'un revêtement de surface, moyens pour la mise en oeuvre de ce procédé et revêtement de surfaces obtenu par ce procédé**

(30) Priorité: 10.12.1997 FR 9715893
(71) Demandeur: Société de Production de Valenciennes, SARL, 59300 Valenciennes (FR)
(72) Inventeur: Kubica, Jean-Claude, 59124 Escaudain (FR); Roux, Benoit, 01400 Sandrans (FR)
(74) Mandataire: Ecrepont, Robert

(57) **Abrégé**

L'invention se rapporte à un procédé de fabrication d'un revêtement de surface comprenant une couche de base sur laquelle on fixe au moins localement par dessus cette couche de base une couche de gravillons.

Selon une caractéristique de l'invention :
- on imprègne avec du polychlorure de vinyl une nappe de fibres constituée en partie de fibres de polyester, et
- on apporte de l'énergie à cette nappe imprégnée pour notamment provoquer un retrait de ses dimensions tranversale et longitudinale et fixer dimensionnellement le produit final.

## Description

L'invention se rapporte à un procédé de fabrication d'un revêtement de surface notamment pour surface ouverte à la circulation et/ou au stationnement des véhicules.

Elle se rapporte également aux moyens pour la mise en oeuvre de ce procédé et au revêtement de surfaces obtenu par ce procédé.

La réfection ou la construction des surfaces routières est généralement réalisée par projection sur le sol d'une couche de bitume chaud suivi d'un dépôt sur le bitume chaud d'une couche de gravillons qui s'y incrustent de sorte qu'en se refroidissant, le bitume assure une certaine liaison des gravillons avec la couche inférieure.

Cette technique, certes simple, ne peut toutefois être mise en oeuvre en toutes saisons.

En outre, la fixation des gravillons est faible.

Au moins certains se déchaussent ce qui, au passage des véhicules, provoque des projections induisant au moins des bris de pare-brises.

Pour remédier à ce problème de mise en oeuvre en toute saison, il est connu FR-A-2.189.580 de préfabriquer en usine un revêtement qui ensuite est transporté sur le site et fixé au sol.

Pour cela, sur un support provisoire :
- on dépose une couche de polychlorure de vinyl de manière à constituer une couche de base d'une épaisseur et d'une dureté prédéterminées et,
- on chauffe cette couche de base à une température et pendant un temps déterminés de manière à ce que la couche de base durcisse partiellement,
- on répand sur cette couche de base une couche de gravillons,
- on dépose sur l'ensemble une nouvelle couche de polychlorure de vinyl puis on chauffe le tout pendant un temps prédéterminé selon la température de chauffe afin d'obtenir une polymérisation poussée.

Le produit obtenu peut ainsi être fabriqué en usine puis, ultérieurement, être transporté sur le site et posé à l'endroit désiré.

En contrôlant précisément les conditions de fabrication, on obtient un revêtement qui se détériore moins vite.

Ces revêtements sont également utilisés pour couvrir des terrasses d'habitation.

Malheureusement, à ce jour, ces revêtements ne permettent pas d'obtenir une étanchéité suffisante en raison d'un retrait relativement important résultant notamment de l'évaporation de certains des composants du revêtement et notamment des solvants.

Un des résultats que l'invention vise à obtenir est un procédé du type précité qui remédie à ces inconvénients et permette notamment d'obtenir un revêtement de surface ayant une plus grande longévité.

A cet effet, l'invention a pour objet un tel procédé de fabrication d'un revêtement de surface selon lequel, sur un support provisoire :
- on forme une couche de base d'une épaisseur et de dureté prédéterminées comprenant du polychlorure de vinyl et
- on fixe au moins localement par dessus cette couche de base une couche de gravillons,
ce procédé étant caractérisé en ce que :
- on imprègne avec du polychlorure de vinyl une nappe de fibres constituée en partie de fibres de polyester,
- on apporte de l'énergie à cette nappe imprégnée pour notamment provoquer un retrait de ses dimensions tranversale et longitudinale et fixer dimensionnellement le produit final,
- après avoir déposé cette couche de base et avant d'y apposer les gravillons, on dépose sur la couche de base prépolymérisée une nouvelle couche de polychlorure de vinyl liquide,
- c'est sur cette nouvelle couche de polychlorure de vinyl liquide qu'on dépose la couche de gravillons préalablement enrobés d'une résine et
- on polymérise l'ensemble ainsi constitué.

L'invention a également pour objet les moyens pour la mise en oeuvre du procédé ainsi que le revêtement obtenu selon ce procédé.

L'invention sera bien comprise à l'aide de la description ci-aprés faite à titre d'exemple non limitatif en regard du dessin ci-annexé qui représente schématiquement :

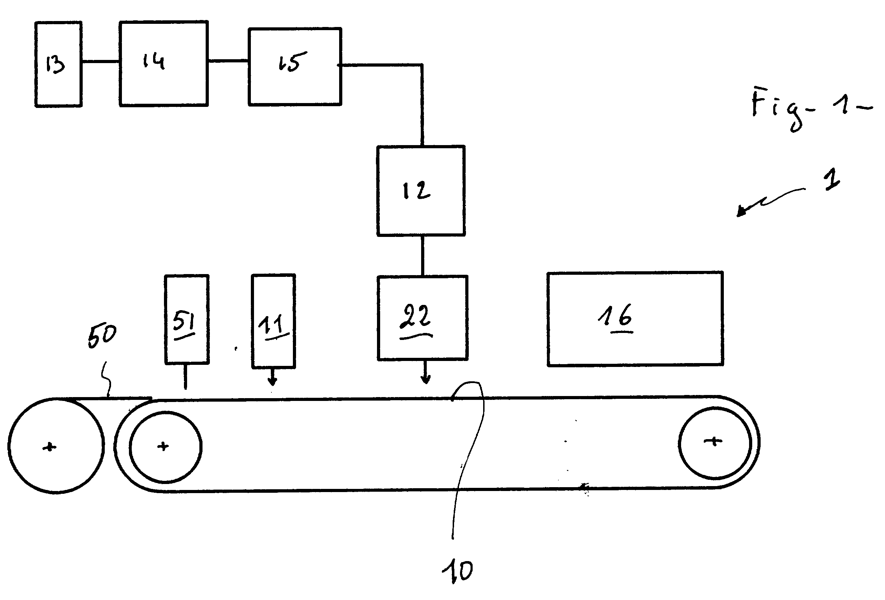

- figure 1 : une installation de fabrication d'un revêtement selon l'invention,

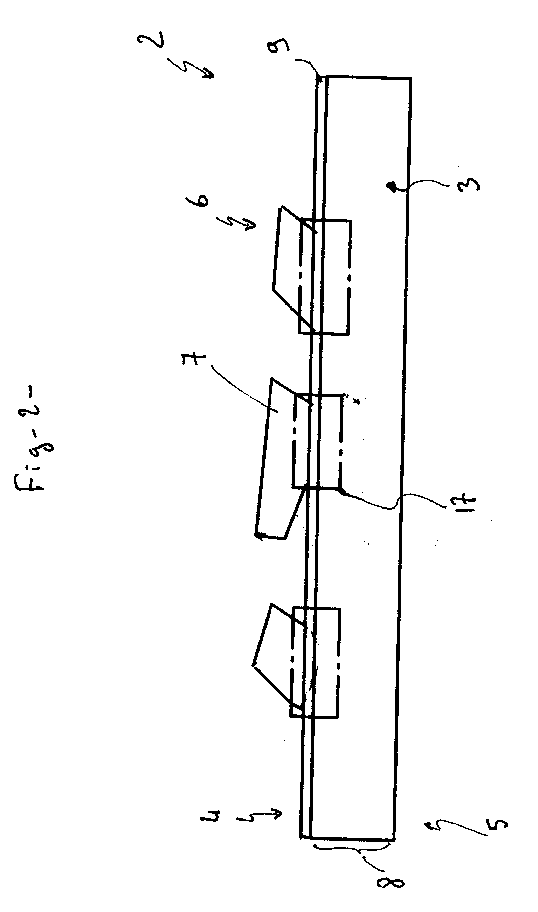

- figure 2 : une coupe d'un revêtement selon l'invention.

En se reportant au dessin, on voit une installation 1 de production d'un revêtement 2 de surface notamment routier comprenant un support 3 portant sur une (4) de ses deux faces 4, 5 une couche 6 de gravillons 7.

Pour la fabrication de ce procédé, on utilise un procédé selon lequel, sur un support 10 provisoire :
- on forme une couche 8 de base d'une épaisseur et de dureté prédéterminées comprenant du polychlorure de vinyl et
- on fixe au moins localement par dessus cette couche 8 de base une couche de gravillons.

Selon ce procédé :
- après avoir déposé cette couche 8 de base et avant d'y apposer les gravillons, on dépose sur la couche 8 de base prépolymérisée une nouvelle couche 9 de polychlorure de vinyl liquide,
- c'est sur cette nouvelle couche de polychlorure de vinyl liquide qu'on dépose la couche de gravillons préalablement enrobés d'une résine et
- on polymérise l'ensemble ainsi constitué.

Lorsque le procédé est réalisé en continu, le revêtement est enroulé progressivement.

Les gravillons sont avantageusement séchés et dépoussiérés avant d'être enrobés dans une résine époxy.

Egalement, les graviers sont précalibrés pour, selon les utilisations, être dans une fourchette de granulométrie déterminée.

De préférence, la polymérisation se fait par chauffage à une température de l'ordre de 180°C.

Avantageusement, pour former la couche de base :
- on imprègne avec du polychlorure de vinyl une nappe 50 de fibres constituée en partie de fibres de polyester,
- on apporte de l'énergie à cette nappe imprégnée pour notamment provoquer un retrait de ses dimensions tranversale et longitudinale et
- c'est sur cette couche de base qu'on reprend le procédé tel qu'indiqué précédemment.

L'apport d'énergie se fera par exemple par chauffage 51.

Avantageusement, pour l'imprégnation, la nappe de fibres traverse un bain et en sortie du bain, la nappe imprégnée est calandrée entre deux rouleaux pour faire pénétrer le polychlorure de vinyl liquide dans la nappe et des moyens de calendrage sont donc prévus à cet effet.

Les moyens pour la mise en oeuvre de l'invention, outre un support 10 provisoire sur lequel est formée une couche 8 de base de polychlorure de vinyl d'une épaisseur et dureté prédéterminées, comprennent :
- d'une part, un moyen 11 pour déposer sur la couche de base une fine couche de polychlorure de vinyl liquide et,
- d'autre part, un moyen 22 pour déposer des gravillons 7 enrobés d'une résine epoxy.

Les moyens de mise en oeuvre du procédé comprennent également des moyens 12 pour enrober les gravillons d'une résine époxy.

Les moyens comprennent également des moyens 13, 14, 15 pour trier les gravillons, pour les sécher et pour les dépoussiérer.

Pour la polymérisation de l'ensemble, on utilisera un four 16.

Le revêtement sorti du four refroidit à l'air libre et est, ensuite, stocké.

Ils comprennent également un bain pour y tremper une nappe de fibres et un dispositif de calendrage.

Le revêtement de surface obtenu selon le procédé de l'invention comprend un moyen 17 de fixation comprenant une couche de résine epoxy enrobant les gravillons et une couche dite d'interface entre le polychlorure de vinyl prépolymérisé de la couche de base et la résine epoxy.

Avantageusement, le revêtement comprend une nappe 50 de fibres souples en fibre de verre ou de carbone ou de céramique ou encore métallique.

Cette nappe de fibres est constituée d'un tissé et d'une couche d'un non tissé revêtue de polyester qui, avec l'apport d'énergie lors du procédé de fabrication, fixe dimensionnellement le produit final.

Cela est particulièrement avantageux car, même s'il y a perte de solvant au cours du temps, la conséquence de cette perte ne se traduit que par une diminution d'épaisseur du produit.

La longueur et la largeur de la bande restent constantes du fait de cette armature fibreuse.

Il sera donc facile de réaliser des terrasses étanches.

Le choix de la taille des gravillons et de sa répartition au mètre carré permet de favoriser, par exemple, l'écoulement de l'eau ou de l'huile.

Pour améliorer la tenue de route des véhicules en cas de verglas, la granulométrie des gravillons sera comprise entre six et huit millimètres avec une répartition d'environ quatre kilogrammes par mètre carré.

Les gravillons pourront être de couleur différente pour que le produit fini présente des graphismes utilisés en signalétique, par exemple, la piste cyclabe ou le passage pour piétons.

On peut également appliquer une couche de billes réfléchissantes.

La couche de polychlorure de vinyl sera éventuellement teintée.

Pour tester le produit, il a été procédé en laboratoire à un test dit de poinçonnement dynamique sous ballast.

Pour cela, une dalle carrée de béton de soixante dix centimètres de coté est recouverte du revêtement selon l'invention.

Cette dalle est posée sur un lit de sable.

Sur le revêtement, est disposé un récipient de soixante centimètres de diamètre et de quarante centimères de hauteur rempli de ballast sur une hauteur de trente centimètres.

Par l'intermédiare d'un fer plat dit de répartition de section carrée de trente centimètres de coté posé sur le récipient, le révêtement est soumis à une charge verticale variable cycliquement, cette variation étant comprise entre 40 et 125 kN avec une fréquence de pulsation de 4Hz.

Il a été réalisé deux millions cent trente huit mille cycles.

La perméabilité a été mesurée selon la norme belge NBN B15-2222. après réalisation de ce test.

Les résultats sont repris dans le tableau annexé.

Essai à réaliser : Perméabilité aprés vibrogyre

L'essai est réalisé suivant la norme NBN B 15-222 sur trois éprouvettes de 80 mm de diamètre, 102 mm de hauteur (dont 7 mm de membrane gravillonnée).

Les mesures sont effectuées successivement :
- aprés 24 heures à 0,5 bar
- aprés 24 heures à 1 bar
- aprés 24 heures à 3 bars

Le coefficient de Darcy est calculé à chaque étape.

## Revendications

1. Procédé de fabrication d'un revêtement de surface selon lequel, sur un support (10) provisoire :
- on forme une couche (8) de base d'une épaisseur et de dureté prédéterminées comprenant du polychlorure de vinyl et
- on fixe au moins localement par dessus cette couche (8) de base une couche de gravillons,
ce procédé étant **CARACTERISE** en ce que :
- on imprègne avec du polychlorure de vinyl une nappe de fibres constituée en partie de fibres de polyester,
- on apporte de l'énergie à cette nappe imprégnée pour notamment provoquer un retrait de ses dimensions tranversale et longitudinale et fixer dimensionnellement le produit final,
- après avoir déposé cette couche (8) de base et avant d'y apposer les gravillons, on dépose sur la couche (8) de base prépolymérisée une nouvelle couche (9) de polychlorure de vinyl liquide,
- c'est sur cette nouvelle couche de polychlorure de vinyl liquide qu'on dépose la couche de gravillons préalablement enrobés d'une résine et
- on polymérise l'ensemble ainsi constitué.

2. Procédé selon la revendication 1 **caractérisé** en ce qu'on sèche les gravillons.

3. Procédé selon la revendication 1 **caractérisé** en ce qu'on dépoussière les gravillons.

4. Procédé selon la revendication 1 **caractérisé** en ce que, pour l'imprégnation, la nappe de fibres traverse un bain et en sortie du bain, la nappe imprégnée est calendrée entre deux rouleaux pour faire pénétrer le polychlorure de vinyl liquide dans la nappe.

5. Moyens pour la mise en oeuvre du procédé selon l'une quelconque des revendications 1 à 3 comprenant :
- un moyen (11) pour déposer sur une couche de base une fine couche de polychlorure de vinyl liquide,
- des moyens (12) pour enrober les gravillons d'une résine époxy, et
- un moyen (22) pour déposer des gravillons (7) enrobés d'une résine epoxy,
ces moyens étant **caractérisés en ce** qu'ils comprennent des moyens (13, 14, 15) pour trier les gravillons, pour les sécher et les dépoussiérer.

6. Moyens selon la revendication 5 **caractérisés** en ce qu'ils comprennent un bain pour y tremper une nappe de fibres et un dispositif de calendrage.

7. Revêtement **caractérisé** en ce qu'il est obtenu selon le procédé de l'une quelconque des revendications 1 à 3.

8. Revêtement selon la revendication 7 **caractérisé** en ce qu'il comprend une nappe (50) de fibres souples constituée, elle-même, d'un tissé et d'une couche de non tissé revêtue de polyester.
